# EUROPEAN PATENT SPECIFICATION

(11) **EP 3 945 963 B1**
(45) Date of publication and mention of the grant of the patent: **14.09.2022**
(21) Application number: 20721111.1
(22) Date of filing: 27.03.2020
(51) Int. Cl.: A47J 31/54

(54) **ELECTROMAGNETIC INDUCTION CONTINUOUS- FLOW WATER HEATER IN AN AUTOMATIC BEVERAGE VENDING MACHINE**
DURCHLAUFERHITZER MIT ELEKTROMAGNETISCHER INDUKTION IN EINEM GETRÄNKEAUTOMATEN
CHAUFFE-EAU À ÉCOULEMENT CONTINU À INDUCTION ÉLECTROMAGNÉTIQUE DANS UNE MACHINE DE PRÉPARATION DE BOISSON AUTOMATIQUE

(30) Priority: 29.03.2019 EP 19166383; 23.05.2019 IT 201900007166
(43) Date of publication of application: 09.02.2022
(73) Proprietor: HEYLO S.R.L., 24121 Bergamo (IT)
(72) Inventor: DOGLIONI MAJER, Andrea, 24121 Bergamo (IT)
(74) Representative: Giannini, Manuela
(86) International application number: PCT/IB2020/052950
(87) International publication number: WO 2020/201962

(56) References cited:
- EP-A1- 2 543 290
- WO-A1-2006/056705
- WO-A1-2007/036076
- WO-A1-2017/191529
- DE-A1- 3 542 507
- FR-A1- 2 855 359
- JP-A- 2001 284 034
- JP-A- 2003 317 915

## Description

### Cross reference to Related Patent Applications

This patent application claims priority of European patent application No. 19166383.0 filed on 29.03.2019 and Italian patent application No. 102019000007166 filed on 23.05.2019.

### Technical Field of the Invention

The present invention generally relates to the sector of automatic beverage vending machines, and in particular to an electromagnetic induction continuous-flow water heater in an automatic hot beverage vending machine from an anhydrous material, for example coffee, tea, chocolate, or similar, to which the following discussion will refer without loss of generality.

### State of the Art

Machines for the preparation and dispensing of beverages, in particular hot beverages from an anhydrous material, e.g. coffee, tea, chocolate, or similar, are known.

These machines are provided with one or more water heaters, usually of two types: storage-type heaters (boilers, kettles) and continuous-flow water heaters.

The latter are devices that heat water according to two main technologies: heating by means of a resistive heating member, very common in the sector, and electromagnetic induction heating, less common in the sector than the previous one.

According to the first technology, a difference in electrical potential is applied to the ends of the heating element, which is directly or indirectly touched by the flow of water to be heated. Thus, an electric current is generated within the heating element which dissipates energy by Joule effect in form of heat, and conductively heats water.

Examples of heaters of this type are described in GB 2 542 359 A, WO2004105438A1, CN 107647785 A, WO 2016/016225 A1, WO 2004/006742 A1, WO 2009/012904 A2, WO 2014/205771 A1, WO 2006/056705 A1, WO 2013/008140 A2, WO 2007/036076 A1, and EP 2 881 020 A1, and DE 3542507 A1.

EP 2 044 869 A1 describes three embodiments of a continuous-flow water heater. The first two embodiments illustrated therein contemplate respective continuous-flow heaters using the first technology, while the third embodiment illustrates, in a relatively simple and not very detailed manner, a heater that heats water using the aforementioned second technology.

According to this second technology, the electromagnetic induction phenomenon is used to heat the water flow.

In particular, continuous-flow water heaters that exploit electromagnetic induction to generate eddy currents inside a duct made of electrically conductive material inside which water to be heated flows, are well-known. Eddy currents dissipate energy, by Joule effect, in the form of heat, thus heating the duct and, consequently, the water flowing in contact with it.

It is well known that electromagnetic induction continuous-flow water heaters are particularly advantageous as they allow water to be heated in a short time.

EP 2 868 242 A1 illustrates a heater comprising a coiled metal duct coaxially housed in a spool cavity made of electrically insulating material on which an electromagnetic induction winding is wound.

The winding is supplied with alternating electric current that generates, by electromagnetic induction, eddy currents that heat, by Joule effect, the spiral metal duct and, therefore, the water flowing inside of it.

The spool is constrained to the machine support structure, while the metal duct has no mechanical constraints with the spool, since it is simply supported by the hydraulic circuit to which it is connected by means of push-in fittings.

More precisely, the metal duct and the spool are radially separated by a void (air gap).

Other examples of electromagnetic induction water heaters are described in JP 2001 284034 A, WO 2017/191529 A1, JP 2003 317915 A, EP 2 881 020 A1, and GB 190915786 A.

### Object and Summary of the Invention

Although continuous-flow water heaters of the above-described type represent a functionally viable solution for water heating in machines configured for the preparation and dispensing of a beverage, the Applicant has found that known heaters can be further improved, particularly with regard to the effectiveness of the achievable heat exchange, and the maintenance efficiency thereof.

The object of the invention is to produce an electromagnetic induction continuous-flow water heater of high reliability and limited cost, which allows to satisfy the above mentioned need related to electromagnetic induction heaters of known type.

According to the invention, this aim is achieved by an electromagnetic induction continuous-flow water heater according to the appended claims.

### Brief Description of Drawings

Figure 1 illustrates schematically and with some parts removed for the sake of clarity an automatic beverage vending machine comprising a heater according to the present invention;
Figures 2a-2c are axial sections, in enlarged scale and with some parts removed for the sake of clarity, of three configurations of the heater of Figure 1, according to a first embodiment;
Figures 3a-3d are axial sections, in enlarged scale and with some parts removed for the sake of clarity, of four configurations of the heater of Figure 1, according to a second embodiment;
Figures 4a and 4b are axial sections, in enlarged scale and with some parts removed for the sake of clarity, of two configurations of the heater of Figure 1, according to a third embodiment;
Figures 5a e 5b are axial sections, in enlarged scale and with some parts removed for the sake of clarity, of two configurations of the heater of Figure 1, according to a fourth embodiment;
Figures 6a-6d are axial sections, in enlarged scale and with some parts removed for the sake of clarity, of four configurations of the heater of Figure 1, according to a fifth embodiment;
Figures 7a-7d are axial sections, in enlarged scale and with some parts removed for the sake of clarity, of four configurations of the heater of Figure 1, according to a sixth embodiment;
Figures 8a-8d are axial sections, in enlarged scale and with some parts removed for the sake of clarity, of four configurations of the heater of Figure 1, according to a seventh embodiment.

### Detailed Description of Preferred Embodiments of the Invention

The present invention will now be described in detail with reference to the appended Figures in order to allow a person skilled in the art to produce and use the same. Various modifications to the described embodiments will become immediately apparent to those skilled in the art and the general principles described can be applied to other embodiments and applications without departing from the protective scope of the invention, as defined in the appended claims. Therefore, the present invention should not be considered limited to the described and illustrated embodiments, but it is intended to have the widest protective scope in accordance with the described and claimed characteristics.

Unless otherwise defined, all technical and scientific terms used herein have the same meaning commonly used by those of ordinary skill in the art of the invention. In case of a dispute, the present description, comprising the definitions provided, will be binding. Furthermore, the examples are provided only for illustrative purposes and as such they should not be regarded as limiting.

In order to facilitate the understanding of the embodiments described here, reference will be made to some specific embodiments and specific language will be used to describe them. The terminology used in this document is intended to describe only particular embodiments and is not intended to limit the scope of the invention.

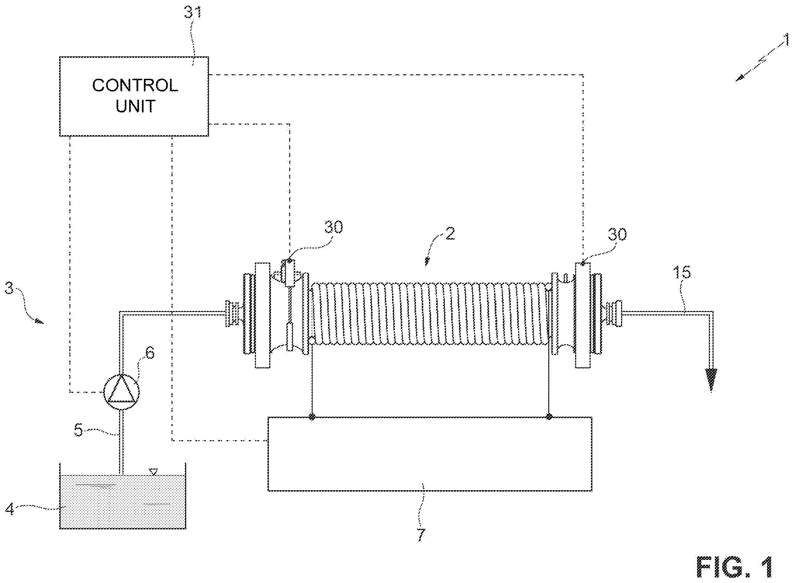

With reference to Figure 1, an automatic beverage vending machine, in particular hot beverages from anhydrous material, e.g. coffee, tea, chocolate, or similar, is schematically indicated as a whole by 1.

The machine 1 comprises:
- an electromagnetic induction continuous-flow water heater 2;
- a hydraulic feeding circuit 3 (schematically illustrated) provided with a vessel 4 configured to hold water, preferably water at room temperature, and to convey a flow of water from vessel 4 to heater 2 via a piping 5 and a hydraulic pump 6; and
- an electrical circuit 7 (schematically illustrated), whose function will be explained below.

In detail, heater 2 is electrically connected to electrical circuit 7 and is fluidically connected to hydraulic circuit 3.

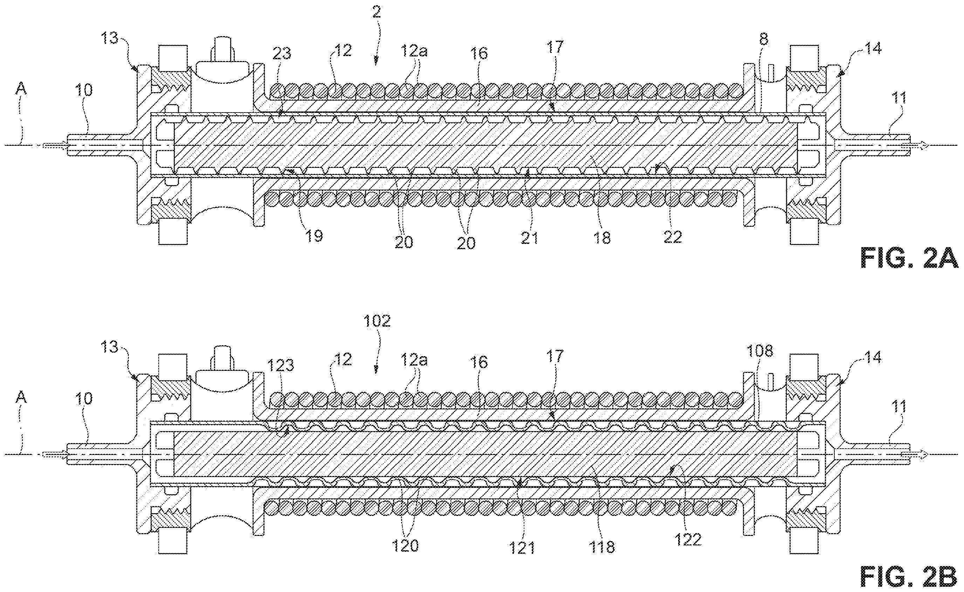

As can be seen in Figure 2a, heater 2 essentially comprises a tubular body 8 having a longitudinal axis A and including at least an inlet 10, in particular an inlet passage, configured to receive the water flow to be heated from vessel 4 and to feed it, in use, into tubular body 8, and an outlet 11, in particular an outlet passage, through which the flow of heated water flows out of the tubular body 8.

According to this preferred and not limiting embodiment, tubular body 8 has a substantially hollow cylindrical shape and axis A is straight. In addition, the tubular body 8 is constrained to an internal support structure (not shown) of machine 1 in a manner known and not described in detail.

For this purpose, heater 2 comprises a first end portion 13 and a second end portion 14, arranged on axially opposite parts of the tubular body 8, fixed to the tubular body 8 and adapted for coupling to the internal support structure of machine 1.

In particular, the first end portion 13 and the second end portion 14 define respective axial closing members of tubular body 8 and comprise inlet 10 and outlet 11, respectively.

More specifically, inlet 10 and outlet 11 are defined by respective hollow projections axially protruding from the first end portion 13 and the second end portion 14, respectively.

In the example illustrated, outlet 11 is fluidically connected with an outlet piping 15 (Figure 1). This outlet piping 15 is configured to convey heated water from heater 2 to a beverage production chamber (not illustrated), where heated water touches anhydrous material, usually contained in a previously perforated capsule. The beverage thus obtained is then conveyed from the production chamber to a dispenser (also not illustrated), by means of which it is expelled from the machine.

Heater 2 further comprises an electrical winding 12 arranged around, i.e. wrapped around, the tubular body 8, coaxial to axis A, and electrically powered to generate an electromagnetic induction field.

In detail, winding 12 is defined by a plurality of subsequent concentric coils 12a wound on the outer surface of a hollow and substantially cylindrical spool 16, coaxially fitted to the tubular body 8. In other words, the tubular body 8 is at least partially housed in the axial cavity of spool 16.

In greater detail, the spool 16 is made of an electrically non-conductive material, i.e. with zero magnetic susceptibility.

Winding 12 is configured to be supplied with an alternating electric current at a given oscillation frequency, and thereby to generate said electromagnetic induction field.

Suitably, tubular body 8 is made of an electrically and magnetically conductive material, and therefore, it is configured to be heated by electromagnetic-induction due to the electromagnetic induction field.

Conveniently, a layer 17 of thermally insulating material is radially interposed between the spool 16 and the outer surface of the tubular body 8, so as to avoid, in use, heat transmission by conduction from the tubular body 8 to the spool 16 itself.

In one embodiment, spool 16 could be co-moulded (over-moulded) with the tubular body 8.

In another embodiment, winding 12 is directly wound onto the tubular body 8, the insulating material layer 17 only being interposed.

In another embodiment, winding 12 is directly wound on the tubular body 8.

As can be seen in Figure 1, machine 1 also comprises a number of temperature sensors 30, in the example described two temperature sensors 30, each arranged at inlet 10 and outlet 11, respectively, and configured to detect water temperature in the respective action zone.

Machine 1 also comprises a control unit 31 configured to receive temperature values detected by temperature sensors 30 and consequently control the activation of electrical circuit 7.

As can be seen in Figure 2a, heater 2 also comprises a non-calorific - i.e. non-thermally generating - insert 18 made of electrically non-conductive material with zero magnetic susceptibility, housed inside the tubular body 8, particularly coaxially to axis A, and extending along axis A.

According to this preferred and non-restrictive embodiment, insert 18 comprises a threading 19 defining a helical crest 20 extending over an outer surface 21 of insert 18 around the longitudinal axis A.

In detail, the helical crest 20 is arranged in contact with an internal surface 22 of the tubular body 8.

Thus, tubular body 8 and insert 18, more specifically outer surface 21 and internal surface 22, delimit a helical water flow channel 23 between them, which helically extends around axis A.

Preferably, helical crest 20 develops according to a constant-pitch cylindrical helix.

In an alternative embodiment, not illustrated, helical crest 20 develops according to a variable-pitch cylindrical helix, or a constant- or variable-pitch conical helix.

In view of the above, flow channel 23 defines a helical, or spiral, passage for heating water flowing through heater 2. Thanks to this configuration, water travels along a path inside tubular body 8 which is longer than the case in which water flow flows axially linearly inside tubular body 8. This allows a precise control of water temperature.

Indeed, this solution is particularly adapted for low flow rates and when high temperature precision is required, e.g. for beverages whose taste is influenced by water temperature.

The operation of heater 2 according to the present invention will be described below, with particular reference to an initial condition where water flow is fed to tubular body 8 through inlet 10.

In this condition, the water flow is diverted from threading 19 of insert 18 and travels the helical flow channel 23 delimited by helical crest 20 and internal surface 22 of the tubular body 8.

At the same time, winding 12 is powered by means of control unit 31, which controls the activation of electrical circuit 7. Tubular body 8 is electromagnetic-induction heated and water flowing through flow channel 23 is consequently conduction heated, as it touches the internal surface 22 of tubular body 8.

At this point, water flows out of outlet 11. This process is repeated for each beverage to be prepared.

Number 102 in Figure 2b indicates an electromagnetic induction water heater as a whole according to an alternative embodiment of the invention.

Since heater 102 is similar to heater 2, the following description is limited to the differences between them, using, where possible, the same references for identical or corresponding parts.

In particular, heater 102 differs from heater 2 in that it comprises a substantially cylindrical insert 118 having a substantially smooth outer surface 121, with no threading, and parallel to axis A.

In addition, heater 102 includes a tubular body 108 provided with a helical crest 120 extending over the internal surface 122 of tubular body 108 around axis A and in contact with the outer surface 121 of insert 118.

Thus, it is defined a helical flow channel 123 delimited by the outer surface 121 and the helical crest 120.

The operation of heater 102 is similar to heater 2.

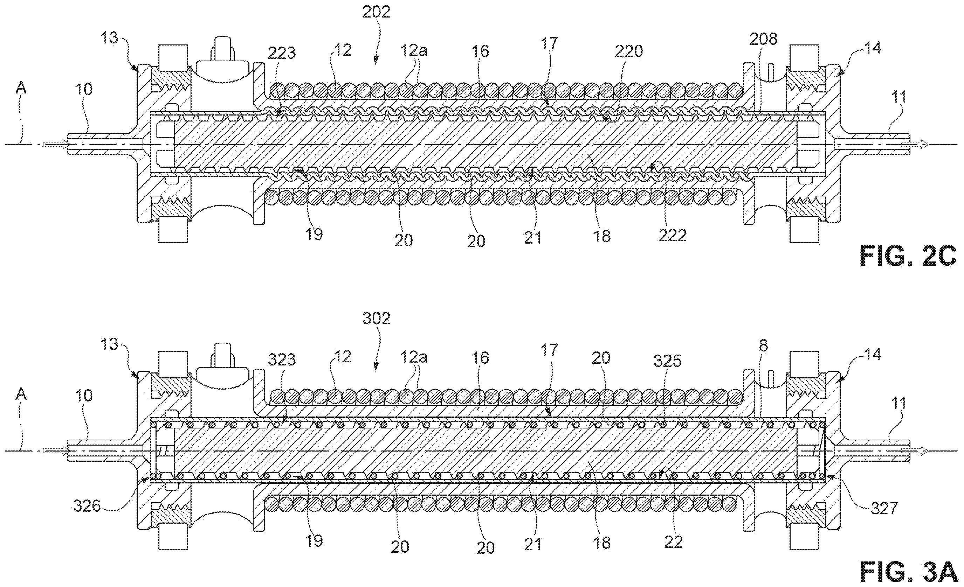

Number 202 in Figure 2c indicates an electromagnetic induction water heater as a whole according to a further embodiment of the invention.

Since heater 202 is similar to heater 2 and to heater 102, the following description is limited to the differences between them, using, where possible, the same references for identical or corresponding parts.

In particular, heater 202 comprises insert 18 and a tubular body 208 substantially similar to the tubular body 108 of heater 102.

Thus, it is defined a helical flow channel 223 delimited between the helical crest 20 of insert 18, a helical crest 220 of tubular body 208, the internal surface 222 of tubular body 208 and the outer surface 21 of insert 18.

The operation of heater 202 is similar to heater 2.

Number 302 in Figure 3a indicates an electromagnetic induction water heater as a whole according to a further embodiment of the invention.

Since heater 302 is similar to heater 2, the following description is limited to the differences between them, using, where possible, the same references for identical or corresponding parts.

In particular, heater 302 differs from heater 2 in that it comprises a water flow diverter member 325, carried by insert 18 and having a helical shape around axis A.

Preferably, diverter member 325 is defined by a cylindrical coil spring, which is coupled to insert 18 so that each coil is housed in a corresponding passage section of the flow channel 323.

Preferably, diverter member 325 is defined by a constant-pitch cylindrical coil spring.

In an alternative embodiment, diverter member 325 is defined by a variable-pitch cylindrical coil spring or a constant- or variable-pitch conical coil spring.

In view of the above, the passage section of flow channel 323 is narrowed compared to the passage section of the flow channel 23 of heater 2.

Thanks to this configuration, the passage section of flow channel 323 can be varied by simply replacing the diverter member 325 -for example, by choosing diverter members 325 with coils having different diameters - without the need to modify or replace the insert 18 or tubular body 8.

In addition, diverter member 325 is arranged in contact with the internal surface 22 of tubular body 8, so that limescale deposited on the internal surface 22 during normal use of machine 1 can be removed by scraping.

In this respect, diverter member 325 is elastically deformable along axis A and has an axial length greater than the axial length of insert 18 under non-deformation conditions.

Thus, during the assembly (fitting) of heater 302, diverter member 325 is elastically compressed and, since it is arranged in contact with internal surface 22, its elastic deformation scrapes off any limescale residues deposited on that internal surface 22.

In greater detail, during assembly, the insert 18, that carries the diverter member 325, is interference fitted inside the tubular body 8, so that the helical crest 20 and diverter member 325 are arranged in contact with the internal surface 22 and until a first axial end 326 of the diverter member abuts first end portion 13.

At this point, the second end portion 14 is coupled to tubular body 8, so as to press and compress the diverter member 325 at its second axial end 327, opposite to the first axial end 326.

This compression causes an axial movement of the coils of the diverter member 325, which scrape the internal surface 22 achieving the desired effect.

The operation of heater 302 is similar to heater 2.

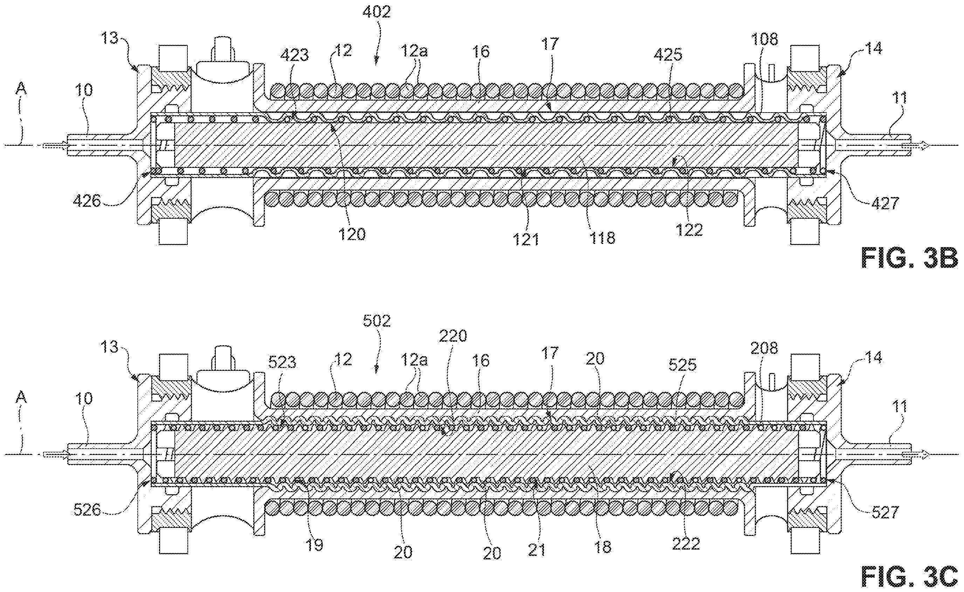

Number 402 in Figure 3b indicates an electromagnetic induction water heater as a whole according to an alternative embodiment of the invention.

Since heater 402 is similar to heater 102, the following description is limited to the differences between them, using, where possible, the same references for identical or corresponding parts.

In particular, heater 402 differs from heater 102 in that it comprises a diverter member 425 which is substantially identical to diverter member 325.

Thus, it is defined a helical flow channel 423 delimited by the outer surface 121, the helical crest 120, and the diverter member 425.

As a result, the passage section of flow channel 423 is narrowed and the passage section of flow channel 423 can be varied by simply replacing the diverter member 425 - for example, by choosing diverter members 425 with coils having different diameters - without the need to modify or replace insert 118 or tubular body 108.

The operation of heater 402 is similar to heater 102.

Number 502 in Figure 3c indicates an electromagnetic induction water heater as a whole according to an alternative embodiment of the invention.

Since heater 502 is similar to heater 202, the following description is limited to the differences between them, using, where possible, the same references for identical or corresponding parts.

In particular, heater 502 differs from heater 202 in that it comprises a diverter member 525 which is substantially identical to diverter member 325.

In particular, heater 502 comprises both insert 18 and tubular body 208.

Thus, it is defined a helical flow channel 523 delimited between the helical crest 20 of insert 18, the helical crest 220 of tubular body 208, the internal surface 222 of tubular body 208, the outer surface 21 of insert 18, and the diverter member 525.

As a result, the passage section of flow channel 523 is narrowed and the passage section of flow channel 523 can be varied by simply replacing the diverter member 525 - for example, by choosing diverter members 525 with coils having different diameters - without the need to modify or replace insert 18 or tubular body 208.

The operation of heater 502 is similar to heater 202.

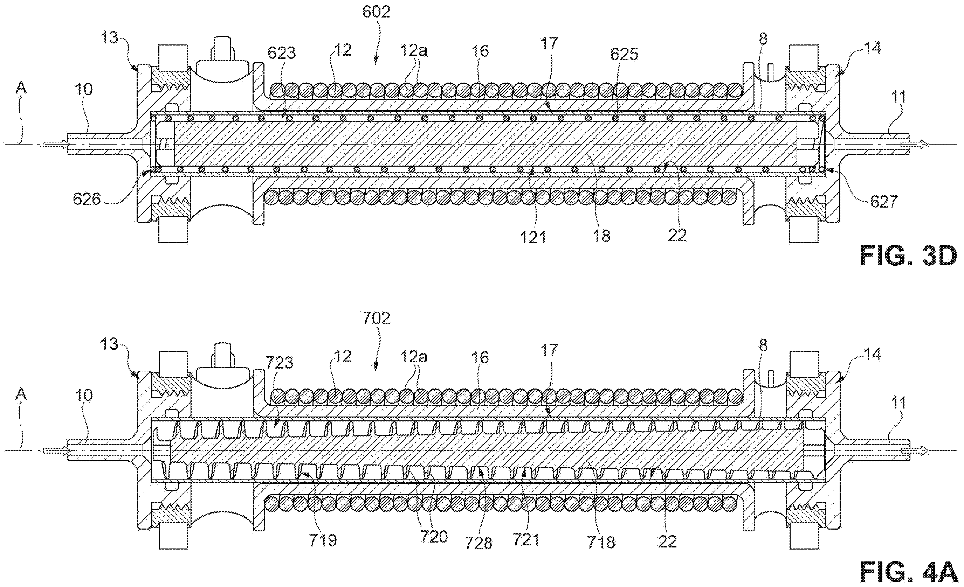

Number 602 in Figure 3d indicates an electromagnetic induction water heater as a whole according to an alternative embodiment of the invention.

Since heater 602 is similar to heater 302, the following description is limited to the differences between them, using, where possible, the same references for identical or corresponding parts.

In particular, heater 602 differs from heater 302 in that it comprises a substantially cylindrical insert 118 having a substantially smooth outer surface 121 and parallel to axis A. Thus, the internal surface 22 of tubular body 8 and the outer surface 121 of insert 118 are cylindrical and parallel to each other and to axis A.

Heater 602 comprises a diverter member 625 wound helically around insert 118 and is arranged in contact with the internal surface 22 of tubular body 8 and with the outer surface 121 of insert 118.

Consequently, in this case the flow channel 623 is delimited by the internal surface 22 of tubular body 8, by the outer surface 121 of insert 118 and by the outer surface of diverter member 625.

The operation of heater 602 is similar to heater 2.

Number 702 in Figure 4a indicates an electromagnetic induction water heater as a whole according to a further embodiment of the invention.

Since heater 702 is similar to heater 2, the following description is limited to the differences between them, using, where possible, the same references for identical or corresponding parts.

In particular, heater 702 differs from heater 2 in that it defines a helical flow channel 723 with a variable flow section along axis A.

For this purpose, heater 702 comprises an insert 718 including a threading 719 having:
- a helical crest 720 extending over an outer surface 721 of insert 718 around axis A; and
- a helical bottom 728 extending over the outer surface 721 around axis A, following the helical crest 720.

In detail, while the maximum diameter of the helical crest 720 is constant, as the helical crest 720 is arranged in contact with the internal surface 22 of tubular body 8, the diameter of the helical bottom 728, relative to axis A, is variable along axis A itself.

In greater detail, this diameter increases considering a direction from inlet 10 to outlet 11.

According to an alternative embodiment, not illustrated, the diameter of helical bottom 728 decreases along said direction.

Thanks to this configuration, it is possible to achieve higher flow rates than using heater 2.

The operation of heater 702 is similar to heater 2.

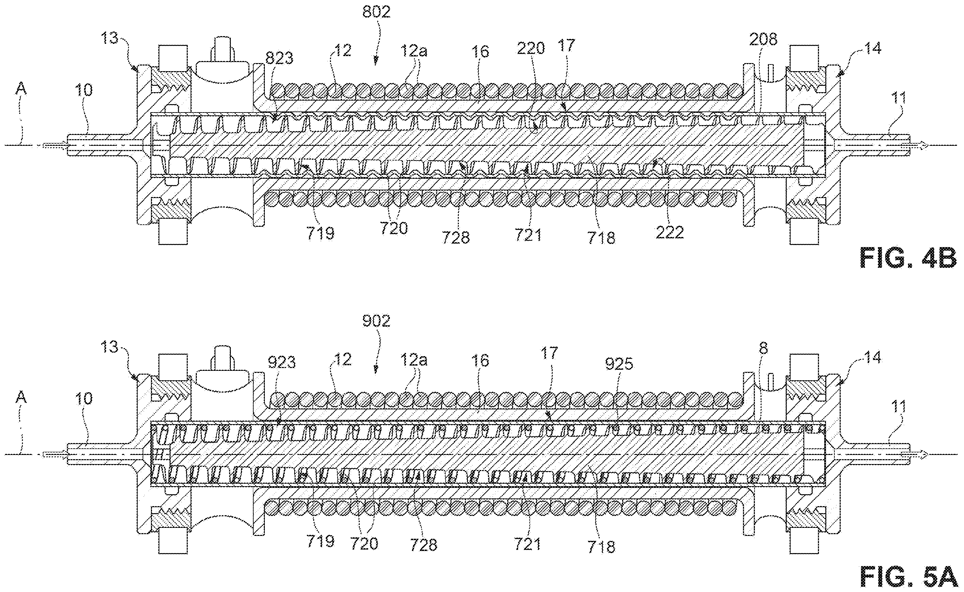

Number 802 in Figure 4b indicates an electromagnetic induction water heater as a whole according to a further embodiment of the invention.

Since heater 802 is similar to heater 702, the following description is limited to the differences between them, using, where possible, the same references for identical or corresponding parts.

In particular, heater 802 differs from heater 702 in that it also comprises a tubular body 208.

Thus, it is defined a helical flow channel 823 delimited between the helical crest 720 of insert 718, the helical crest 220 of tubular body 208, the internal surface 222 of tubular body 208 and the outer surface 721 of insert 718.

The operation of heater 802 is similar to heater 702.

Number 902 in Figure 5a indicates an electromagnetic induction water heater as a whole according to a further embodiment of the invention.

Since heater 902 is similar to heater 702, the following description is limited to the differences between them, using, where possible, the same references for identical or corresponding parts.

In particular, heater 902 differs from heater 702 in that it also comprises a diverter member 925, which is substantially identical to diverter member 325 of heater 302 and has the same characteristics and functions.

Thanks to this configuration, the passage section of flow channel 923 can be varied by simply replacing diverter member 925.

The operation of heater 902 is similar to heater 702.

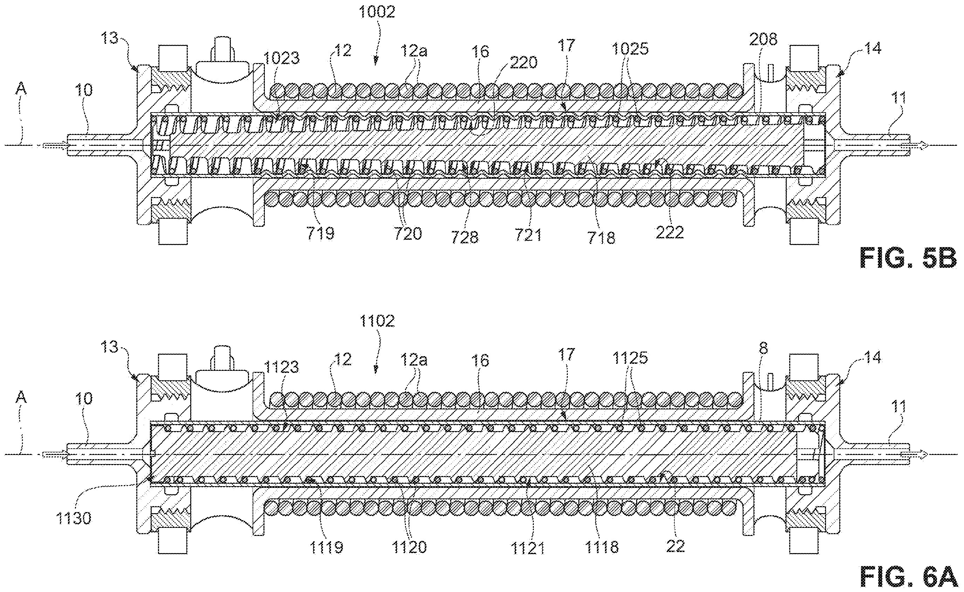

Number 1002 in Figure 5b indicates an electromagnetic induction water heater as a whole according to a further embodiment of the invention.

Since heater 1002 is similar to heater 802, the following description is limited to the differences between them, using, where possible, the same references for identical or corresponding parts.

In particular, heater 1002 differs from heater 802 in that it also comprises a diverter member 1025, which is substantially identical to diverter member 925 of heater 902 and has the same characteristics and functions.

The operation of heater 1002 is similar to heater 902.

Number 1102 in Figure 6a indicates an electromagnetic induction water heater as a whole according to a further embodiment of the invention.

Since heater 1102 is similar to heater 302, the following description is limited to the differences between them, using, where possible, the same references for identical or corresponding parts.

In particular, heater 1102 differs from heater 302 in that it comprises an insert 1118 substantially similar to insert 18 and movable inside the tubular body 8 at least between:
- a first position, wherein insert 1118 is arranged closer to inlet 10; and
- a second position, wherein insert 1118 is arranged closer to outlet 11.

In detail, insert 1118 comprises a closing portion, in the specific example a shutter 1130 configured to fluid-tightly seal inlet 10.

In more detail, the shutter 1130 is configured to fluid-tightly seal inlet 10 when insert 1118 is arranged in the first position.

According to this preferred embodiment, insert 1118 is movable between the first and second positions by means of water flow pressure acting on insert 1118 itself at inlet 10, in particular acting on shutter 1130.

More precisely, in use, water flow pressure fed to tubular body 8 through inlet 10 pushes the shutter 1130, and therefore the insert 1118, towards the second position, thus opening the water passage and allowing water to flow into flow channel 1123.

Suitably, a diverter member 1125, substantially similar to diverter member 325, also acts as a feedback member for shutter 1130, holding insert 1118 in the first position, in idle conditions (when water does not push shutter 1130).

Conveniently, during the movement of insert 1118 from the first to the second positions and vice versa, the diverter member 1125 scrapes the internal surface 22 of tubular body 8.

Thus, it is possible to automatically carry out maintenance - removal of limescale residues - and also provide an automatic fluid-tight closure of channel 1123.

The operation of heater 1102 is similar to heater 302.

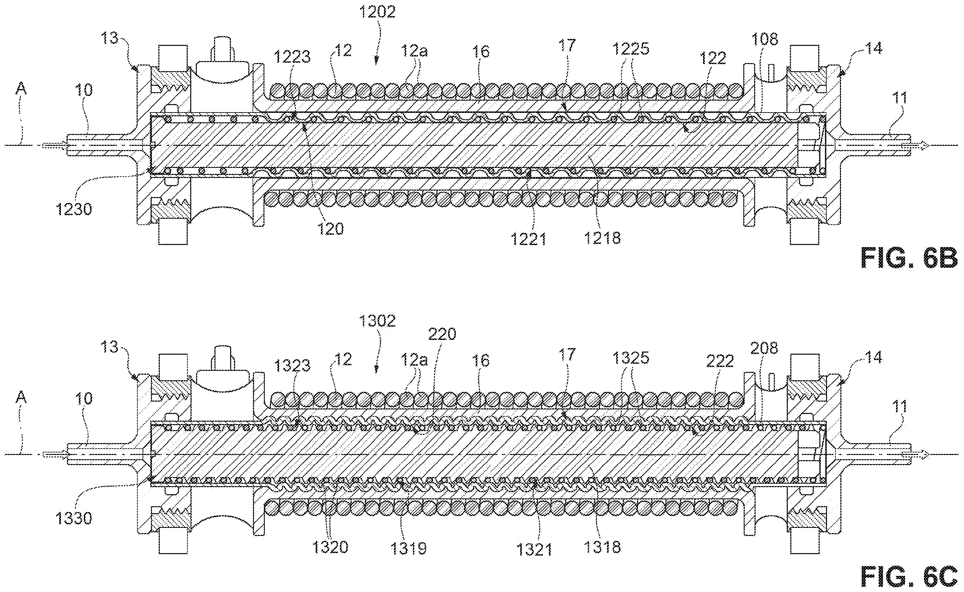

Number 1202 in Figure 6b indicates an electromagnetic induction water heater as a whole according to a further embodiment of the invention.

Since heater 1202 is similar to heater 402, the following description is limited to the differences between them, using, where possible, the same references for identical or corresponding parts.

In particular, heater 1202 differs from heater 402 in that it comprises a shutter 1230 that is structurally and functionally similar to shutter 1130. Insert 1218 is substantially similar to insert 118 (smooth and cylindrical) except for shutter 1230.

The presence of a diverter member 1225, substantially similar to diverter member 425, defines a flow channel 1223 substantially similar to flow channel 423.

The operation of heater 1202 is similar to heater 1102.

Number 1302 in Figure 6c indicates an electromagnetic induction water heater as a whole according to a further embodiment of the invention.

Since heater 1202 is similar to heater 502, the following description is limited to the differences between them, using, where possible, the same references for identical or corresponding parts.

In particular, heater 1302 differs from heater 502 in that it comprises a shutter 1330 that is structurally and functionally similar to shutter 1130. Insert 1318 is substantially similar to insert 18, except for shutter 1330.

The presence of a diverter member 1325, substantially similar to diverter member 525, defines a flow channel 1323 substantially similar to flow channel 523.

The operation of heater 1302 is similar to heater 1102.

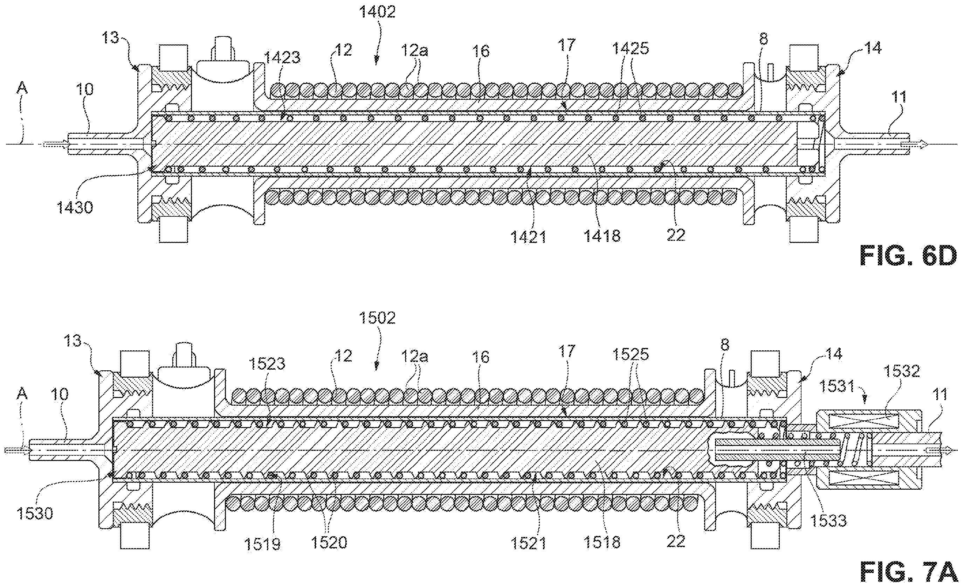

Number 1402 in Figure 6d indicates an electromagnetic induction water heater as a whole according to a further embodiment of the invention.

Since heater 1402 is similar to heater 602, the following description is limited to the differences between them, using, where possible, the same references for identical or corresponding parts.

In particular, heater 1402 differs from heater 602 in that it comprises a shutter 1430 that is structurally and functionally similar to shutter 1130. Insert 1418 is substantially similar to insert 18, apart from shutter 1430.

The presence of a diverter member 1425, substantially similar to diverter member 625, defines a flow channel 1423 substantially similar to flow channel 623.

The operation of heater 1402 is similar to heater 1102.

Number 1502 in Figure 7a indicates an electromagnetic induction water heater as a whole according to a further embodiment of the invention.

Since heater 1502 is similar to heater 1102, the following description is limited to the differences between them, using, where possible, the same references for identical or corresponding parts.

In particular, heater 1502 differs from heater 1102 in that it comprises an insert 1518 that is structurally and functionally similar to insert 1118, therefore comprising a shutter 1530 substantially similar to shutter 1130 and a diverter member 1525 substantially similar to diverter member 1125, and movable within tubular body 8 by means of a magnetic actuator 1531, configured to control the movement of insert 1518 between the first and second positions by means of a magnetic interaction.

In greater detail, magnetic actuator 1531 comprises a solenoid 1532 that is fixed and selectively electrically powered to generate an electromagnetic field, and a permanent magnet 1533, integrally fixed to insert 1518 and configured to be magnetically coupled to solenoid 1532.

More precisely, by powering solenoid 1532, a movement of permanent magnet 1533 and, therefore, of insert 1518 will be achieved in a known way.

Thanks to this configuration, it is possible to control the movement of insert 1518, and thus everything that follows - for example, the removal of limescale by means of diverter member 1525 - regardless of water pressure exerted on insert 1518.

Preferably, magnetic actuator 1531 is arranged at outlet 11.

The operation of heater 1502 is similar to heater 1102.

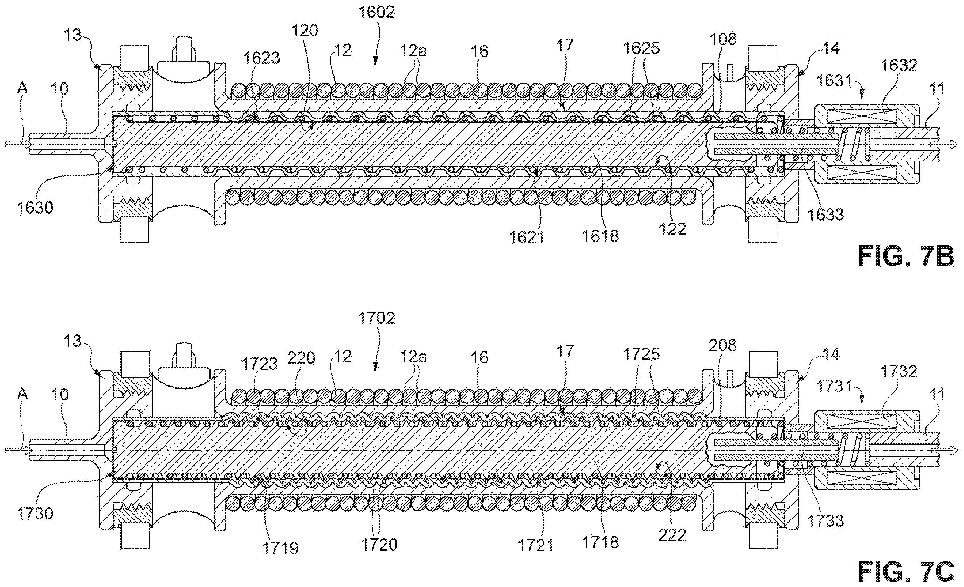

Number 1602 in Figure 7b indicates an electromagnetic induction water heater as a whole according to a further embodiment of the invention.

Since heater 1602 is similar to heater 1202, the following description is limited to the differences between them, using, where possible, the same references for identical or corresponding parts.

In particular, heater 1602 differs from heater 1202 in that it comprises an insert 1618, and therefore it comprises a shutter 1630 substantially similar to shutter 1230 and a diverter member 1625 substantially similar to diverter member 1225, which is structurally and functionally similar to insert 1218, but movable within tubular body 108 by means of a magnetic actuator 1631 which is substantially structurally and functionally identical to magnetic actuator 1531.

The operation of heater 1602 is similar to heater 1502.

Number 1702 in Figure 7c indicates an electromagnetic induction water heater as a whole according to a further embodiment of the invention.

Since heater 1702 is similar to heater 1302, the following description is limited to the differences between them, using, where possible, the same references for identical or corresponding parts.

In particular, heater 1702 differs from heater 1302 in that it comprises an insert 1718 that is structurally and functionally similar to insert 1318, therefore comprising a shutter 1730 substantially similar to shutter 1330 and a diverter member 1725 substantially similar to diverter member 1325, and movable within tubular body 208 by means of a magnetic actuator 1731, which is substantially structurally and functionally identical to magnetic actuator 1531.

The operation of heater 1702 is similar to heater 1502.

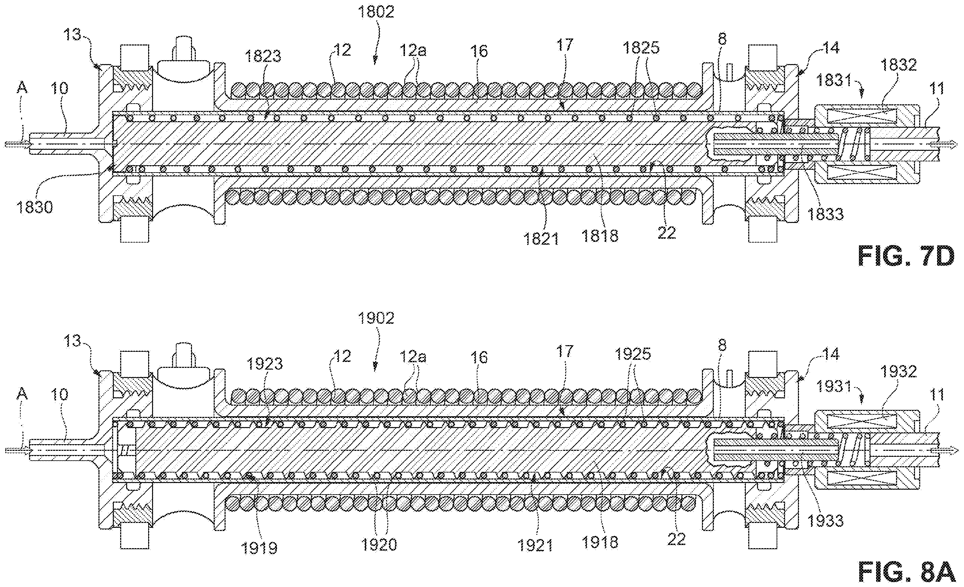

Number 1802 in Figure 7d indicates an electromagnetic induction water heater as a whole according to a further embodiment of the invention.

Since heater 1802 is similar to heater 1402, the following description is limited to the differences between them, using, where possible, the same references for identical or corresponding parts.

In particular, heater 1802 differs from heater 1402 in that it comprises an insert 1818 that is structurally and functionally similar to insert 1418, therefore comprising a shutter 1830 substantially similar to shutter 1430 and a diverter member 1825 substantially similar to diverter member 1425, but movable within tubular body 8 by means of a magnetic actuator 1831, which is substantially structurally and functionally identical to magnetic actuator 1531.

The operation of heater 1802 is similar to heater 1502.

Number 1902 in Figure 8a indicates an electromagnetic induction water heater as a whole according to a further embodiment of the invention.

Since heater 1902 is similar to heater 302, the following description is limited to the differences between them, using, where possible, the same references for identical or corresponding parts.

In particular, heater 1902 differs from heater 302 in that it comprises an insert 1918, which is structurally and functionally similar to insert 18, but movable within tubular body 8 by means of a magnetic actuator 1931 which is substantially structurally and functionally identical to magnetic actuator 1531.

Thanks to this configuration, insert 1918 is control-movable inside tubular body 8, without substantial contribution of fluid pressure on insert 1918.

The operation of heater 1902 is similar to heater 1502.

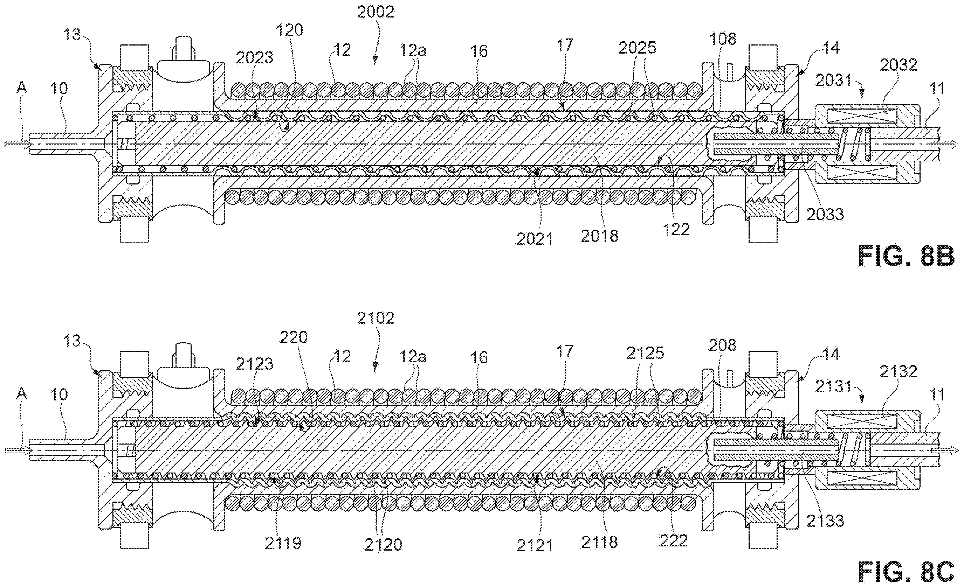

Number 2002 in Figure 8b indicates an electromagnetic induction water heater as a whole according to a further embodiment of the invention.

Since heater 2002 is similar to heater 402, the following description is limited to the differences between them, using, where possible, the same references for identical or corresponding parts.

In particular, heater 2002 differs from heater 402 in that it comprises an insert 2018, which is structurally and functionally similar to insert 118, but movable within tubular body 108 by means of a magnetic actuator 2031 which is substantially structurally and functionally identical to magnetic actuator 1531.

Thanks to this configuration, insert 2018 is control-movable inside tubular body 108, without substantial contribution of fluid pressure on insert 2018.

The operation of heater 2002 is similar to heater 1502.

Number 2102 in Figure 8c indicates an electromagnetic induction water heater as a whole according to a further embodiment of the invention.

Since heater 2102 is similar to heater 502, the following description is limited to the differences between them, using, where possible, the same references for identical or corresponding parts.

In particular, heater 2102 differs from heater 502 in that it comprises an insert 2118, which is structurally and functionally similar to insert 18, but movable within tubular body 208 by means of a magnetic actuator 2131 which is substantially structurally and functionally identical to magnetic actuator 1531.

Thanks to this configuration, insert 2118 is control-movable inside tubular body 208, without substantial contribution of fluid pressure on insert 2118.

The operation of heater 2102 is similar to heater 1502.

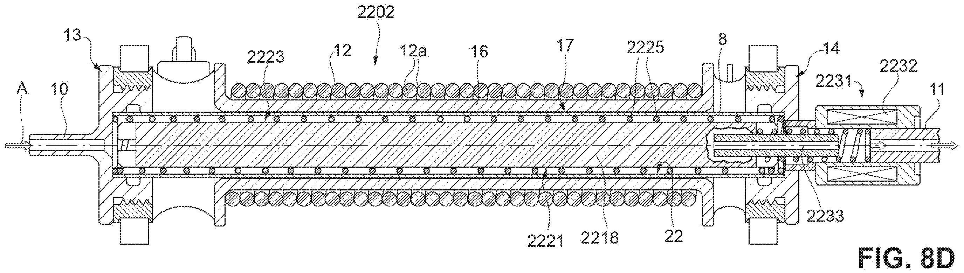

Number 2202 in Figure 8d indicates an electromagnetic induction water heater as a whole according to a further embodiment of the invention.

Since heater 2202 is similar to heater 602, the following description is limited to the differences between them, using, where possible, the same references for identical or corresponding parts.

In particular, heater 2202 differs from heater 602 in that it comprises an insert 2218, which is structurally and functionally similar to insert 118, but movable within tubular body 8 by means of a magnetic actuator 2231 which is substantially structurally and functionally identical to magnetic actuator 1531.

Thanks to this configuration, insert 2218 is control-movable inside tubular body 8, without substantial contribution of fluid pressure on insert 2218.

The operation of heater 2202 is similar to heater 1502.

From an examination of the characteristics of heater 2, 102, 302, 403, 502, 602, 702, 802, 902, 1002, 1102, 1202, 1302, 1402, 1502, 1602, 1702, 1802, 1902, 2002, 2102, 2202 produced according to the present invention, the advantages that it allows to achieve are evident.

In particular, thanks to the helical shape of flow channel, 23, 123, 223, 323, 423, 523, 623, 723, 823, 923, 1023, 1123, 1223, 1323, 1423, 1523, 1623, 1723, 1823, 1923, 2023, 2123, 2223, water travels a much longer path inside tubular body 8, compared to the case where water flow is axially linear. This allows a precise control of water temperature. This solution is particularly adapted for low flow rates and when high temperature precision is required, e.g. for beverages whose taste is influenced by water temperature.

In addition, whenever a diverter member 325, 425, 525, 625, 725, 825, 925, 1025, 1125, 1225, 1325, 1425, 1525, 1625, 1725, 1825, 1925, 2025, 2125, 2225 within flow channel 323, 423, 523, 623, 723, 823, 923, 1023, 1123, 1223, 1323, 1423, 1523, 1623, 1723, 1823, 1923, 2023, 2123, 2223 is present, it is possible to vary the flow channel passage section by simply replacing the diverter member - for example, by choosing diverter members whose coils have different diameters - without the need to modify or replace the insert or tubular body.

In addition, since the diverter member is elastically deformable and is arranged in contact with the internal surface of tubular body, the axial movement of the diverter member coils during the elastic deformation causes the scraping, and thereby the removal, of any limescale residues that may have deposited on this internal surface during assembly.

Particularly advantageous is the case in which this axial movement of diverter member 1123, 1223, 1323, 1423, 1523, 1623, 1723, 1823, 1923, 2023, 2123, 2223 is automatically controlled, e.g. by water pressure on insert 1118, 1218, 1318, 1418, or by activation of an electromagnetic actuator that moves insert 1918, 2018, 2118, 2218, or by both of the above solutions, with regards to insert 1518, 1618, 1718, 1818.

Furthermore, if insert 718 defines a flow channel 723, 823, 923, 1023 having a variable passage section along axis A, it is possible to achieve higher flow rates than if a flow channel with a constant passage section along axis A is used.

It is understood that various modifications and variations can be made to the heater 2, 102, 302, 403, 502, 602, 702, 802, 902, 1002, 1102, 1202, 1302, 1402, 1502, 1602, 1702, 1802, 1902, 2002, 2102, 2202 described and illustrated herein without departing from the protective scope defined by the claims.

## Claims

1. An electromagnetic induction continuous-flow water heater (2, 102, 302, 403, 502, 602, 702, 802, 902, 1002, 1102, 1202, 1302, 1402, 1502, 1602, 1702, 1802, 1902, 2002, 2102, 2202), in particular for an automatic beverage vending machine (1);
the heater comprises:
- a tubular body (8, 108, 208) having a longitudinal axis (A) and including at least one inlet (10), configured to receive water to be heated and to feed it, in use, into the tubular body (8, 108, 208), and an outlet (11), through which the heated water flows out of the tubular body (8, 108, 208); and
- an electrical winding (12) wound around the tubular body (8, 108, 208) and electrically powerable to generate an electromagnetic induction field;
the tubular body (8, 108, 208) is made of an electrically conductive material so that it is heated by electromagnetic induction due to the effect of said electromagnetic induction field;
the heater further comprises an insert (18, 118, 718, 1118, 1218, 1318, 1418, 1518, 1618, 1718, 1818, 1918, 2018, 2118, 2218) housed inside the tubular body (8, 108, 208) and extending along the longitudinal axis (A); **characterized in that**
the heater further comprises a helical flow channel (23, 123, 223, 323, 423, 523, 623, 723, 823, 923, 1023, 1123, 1223, 1323, 1423, 1523, 1623, 1723, 1823, 1923, 2023, 2123, 2223) for the water, which extends helically around the longitudinal axis (A) and is delimited by the internal surface (22, 122, 222) of the tubular body (8, 108, 208) and the external surface (21, 121, 721, 1121, 1221, 1321, 1421, 1521, 1621, 1721, 1821, 1921, 2021, 2121, 2221) of the insert.

2. The heater (2, 202, 302, 502, 702, 802, 902, 1002, 1102, 1302, 1502, 1702, 1902, 2102) as claimed in claim 1, wherein the insert (18, 718, 1118, 1318, 1518, 1718, 1918, 2118) comprises a threading (19, 719, 1119, 1319, 1519, 1719, 1919, 2119) defining a first helical crest (20, 720, 1120, 1320, 1520, 1720, 1920, 2120) extending onto the external surface (21, 721, 1121, 1321, 1521, 1721, 1921, 2121) of the insert around the longitudinal axis (A) and arranged in contact with the internal surface (22, 222) of the tubular body (8, 208), so as to delimit the flow channel (23, 223, 323, 523, 723, 823, 923, 1023, 1123, 1323, 1523, 1723, 1923, 2123).

3. The heater (202, 502, 802, 1002, 1302, 1702, 2102) as claimed in claim 2, wherein the tubular body (208) comprises a second helical crest (220) which extends onto the internal surface (222) of the tubular body (208) around the longitudinal axis (A); and
the first helical crest (20, 720, 1320, 1720, 2120) and the second helical crest (220) delimit at least between one another the flow channel (223, 523, 823, 1023, 1323, 1723, 2123).

4. The heater (102, 402, 1202, 1602, 2002) as claimed in claim 1, wherein the tubular body (108) comprises a helical crest (120) which extends onto the internal surface (122) of the tubular body (108) around the longitudinal axis (A) and which is arranged in contact with the external surface (121, 1221, 1621, 2021) of the insert (118, 1218, 1618, 2018), so as to delimit the flow channel (123, 423, 1223, 1623, 2023); and wherein the external surface of the insert is cylindrical and parallel to the longitudinal axis (A).

5. The heater as claimed in any one of the preceding claims, further comprising a water flow diverter member (325, 425, 525, 625, 725, 825, 925, 1025, 1125, 1225, 1325, 1425, 1525, 1625, 1725, 1825, 1925, 2025, 2125, 2225), arranged inside the flow channel (323, 423, 523, 623, 723, 823, 923, 1023, 1123, 1223, 1323, 1423, 1523, 1623, 1723, 1823, 1923, 2023, 2123, 2223), carried by the insert (18, 118, 718, 1118, 1218, 1318, 1418, 1518, 1618, 1718, 1818, 1918, 2018, 2118, 2218) and having a helical shape around the longitudinal axis (A);
the diverter member is arranged in contact with the internal surface (22, 122, 222) of the tubular body (8, 108, 208).

6. The heater (602, 1402, 1802, 2202) as claimed in claim 5 when depending on claim 1, wherein the internal surface (22) of the tubular body (8) and the external surface (121, 1421, 1821, 2221) of the insert (118, 1418, 1818, 2218) are cylindrical and parallel to the longitudinal axis (A);
wherein the diverter member (625, 1425, 1825, 2225) is wound helically around the insert (118, 1418, 1818, 2218) and is arranged in contact with the internal surface (22) of the tubular body (8) and with the external surface (121, 1421, 1821, 2221) of the insert (118, 1418, 1818, 2218); and
wherein the flow channel (623, 1423, 1823, 2223) is further delimited by part of the external surface of the diverter member (625, 1425, 1825, 2225).

7. The heater as claimed in claim 5 or 6, wherein the diverter member (325, 425, 525, 625, 725, 825, 925, 1025, 1125, 1225, 1325, 1425, 1525, 1625, 1725, 1825, 1925, 2025, 2125, 2225) is elastically deformable along the longitudinal axis (A) and has, when undeformed, an axial length greater than the axial length of the insert (18, 118, 718, 1118, 1218, 1318, 1418, 1518, 1618, 1718, 1818, 1918, 2018, 2118, 2218); and
wherein the diverter member is elastically deformed in assembly conditions.

8. The heater (702, 802, 902, 1002) as claimed in any one of the preceding claims, wherein the flow channel (723, 823, 923, 1023) has a passage section variable along the longitudinal axis (A).

9. The heater (1102, 1202, 1302, 1402, 1502, 1602, 1702, 1802, 1902, 2002, 2102, 2202) as claimed in any one of the preceding claims, wherein the insert (1118, 1218, 1318, 1418, 1518, 1618, 1718, 1818, 1918, 2018, 2118, 2218) is movable inside the tubular body (8, 108, 208) between at least a first position, in which the insert is arranged closest to the inlet (10), and a second position, in which the insert is arranged closest to the outlet (11).

10. The heater (1102, 1202, 1302, 1402, 1502, 1602, 1702, 1802) as claimed in claim 9, wherein the insert (1118, 1218, 1318, 1418, 1518, 1618, 1718, 1818) comprises a closing portion (1130, 1230, 1330, 1430, 1530, 1630, 1730, 1830) configured to fluid-tightly seal the inlet when the insert is arranged in the first position.

11. The heater (1102, 1202, 1302, 1402, 1502, 1602, 1702, 1802) as claimed in claim 10, wherein the insert (1118, 1218, 1318, 1418, 1518, 1618, 1718, 1818) is movable inside the tubular body (8, 108, 208) by means of the pressure of the water flow acting on the insert itself at the inlet (10).

12. The heater (1502, 1602, 1702, 1802, 1902, 2002, 2102, 2202) as claimed in claim 9, wherein the insert (1518, 1618, 1718, 1818, 1918, 2018, 2118, 2218) is movable inside the tubular body (8, 108, 208) by means of a magnetic actuator (1531, 1631, 1731, 1831, 1931, 2031, 2131, 2231) configured to control the movement of the insert between the first position and the second position.

13. The heater as claimed in any one of the preceding claims, wherein the winding (12) is wound directly onto the tubular body (8, 108, 208) or wherein the winding is wound onto a spool (16) co-moulded on the tubular body (8, 108, 208).

14. A machine (1) for the production of hot beverages comprising:
- an electromagnetic induction continuous-flow water heater (2, 102, 302, 403, 502, 602, 702, 802, 902, 1002, 1102, 1202, 1302, 1402, 1502, 1602, 1702, 1802, 1902, 2002, 2102, 2202) as claimed in any one of the preceding claims;
- a hydraulic feeding circuit (3) fluidically connected to the heater to feed it with a flow of water; and
- an electric supply circuit (7) electrically connected to the winding (12) to electrically power it.

## Patentansprüche

1. Wasserdurchlauferhitzer mit elektromagnetischer Induktion (2, 102, 302, 403, 502, 602, 702, 802, 902, 1002, 1102, 1202, 1302, 1402, 1502, 1602, 1702, 1802, 1902, 2002, 2102, 2202) insbesondere für einen automatischen Getränkeautomaten (1);
wobei der Erhitzer aufweist:
- einen rohrförmigen Körper (8, 108, 208) mit einer Längsachse (A), der wenigstens einen Einlass (10), der konfiguriert ist, um Wasser, das erhitzt werden soll aufzunehmen und es beim Gebrauch in den rohrförmigen Körper (8, 108, 208) zu speisen, und einen Auslass (11), durch den das erhitzte Wasser aus dem rohrförmigen Körper (8, 108, 208) fließt, aufweist; und
- eine elektrische Wicklung (12), die um den rohrförmigen Körper (8, 108, 208) herum gewickelt ist und elektrisch betreibbar ist, um ein elektromagnetisches Induktionsfeld zu erzeugen;
wobei der rohrförmige Körper (8, 108, 208) aus einem elektrisch leitfähigen Material hergestellt ist, so dass er durch elektromagnetische Induktion aufgrund der Wirkung des elektromagnetischen Induktionsfelds erhitzt wird;
wobei der Erhitzer ferner einen Einsatz (18, 118, 718, 1118, 1218, 1318, 1418, 1518, 1618, 1718, 1818, 1918, 2018, 2118, 2218) aufweist, der im Inneren des rohrförmigen Körpers (8, 108, 208) aufgenommen ist und sich entlang der Längsachse (A) erstreckt; **dadurch gekennzeichnet, dass**:
der Erhitzer ferner einen spiralförmigen Fließkanal (23, 123, 223, 323, 423, 523, 623, 723, 823, 923, 1023, 1123, 1223, 1323, 1423, 1523, 1623, 1723, 1823, 1923, 2023, 2123, 2223) für das Wasser aufweist, der sich spiralförmig um die Längsachse (A) erstreckt und durch die Innenoberfläche (22, 122, 222) des rohrförmigen Körpers (8, 108, 208) und die Außenoberfläche (21, 121, 721, 1121, 1221, 1321, 1421, 1521, 1621, 1721, 1821, 1921, 2021, 2121, 2221) des Einsatzes begrenzt wird.

2. Erhitzer (2, 202, 302, 502, 702, 802, 902, 1002, 1102, 1302, 1502, 1702, 1902, 2102) nach Anspruch 1, wobei der Einsatz (18, 718, 1118, 1318, 1518, 1718, 1918, 2118) ein Gewinde (19, 719, 1119, 1319, 1519, 1719, 1919, 2119) aufweist, das einen ersten Spiralscheitel (20, 720, 1120, 1320, 1520, 1720, 1920, 2120) definiert, der sich auf der Außenoberfläche (21, 721, 1121, 1321, 1521, 1721, 1921, 2121) des Einsatzes um die Längsachse (A) herum erstreckt und in Kontakt mit der Innenoberfläche (22, 222) des rohrförmigen Körpers (8, 208) angeordnet ist, um den Fließkanal (23, 223, 323, 523, 723, 823, 923, 1023, 1123, 1323, 1523, 1723, 1923, 2123) zu begrenzen.

3. Erhitzer (202, 502, 802, 1002, 1302, 1702, 2102) nach Anspruch 2, wobei der rohrförmige Körper (208) einen zweiten Spiralscheitel (220) aufweist, der sich auf der Innenoberfläche (222) des rohrförmigen Körpers (208) um die Längsachse (A) herum erstreckt; und
wobei der erste Spiralscheitel (20, 720, 1320, 1720, 2120) und der zweite Spiralscheitel (220) den Fließkanal (223, 523, 823, 1023, 1323, 1723, 2123) wenigstens zwischeneinander begrenzen.

4. Erhitzer (102, 402, 1202, 1602, 2002) nach Anspruch 1, wobei der rohrförmige Körper (108) einen Spiralscheitel (120) aufweist, der sich auf der Innenoberfläche (122) des rohrförmigen Körpers (108) um die Längsachse (A) herum erstreckt und der in Kontakt mit der Außenoberfläche (121, 1221, 1621, 2021) des Einsatzes (118, 1218, 1618, 2018) angeordnet ist, um den Fließkanal (123, 423, 1223, 1623, 2023) zu begrenzen; und wobei die Außenoberfläche des Einsatzes zylindrisch und parallel zu der Längsachse (A) ist.

5. Erhitzer nach einem der vorhergehenden Ansprüche, der ferner ein Wasserflussverteilerelement (325, 425, 525, 625, 725, 825, 925, 1025, 1125, 1225, 1325, 1425, 1525, 1625, 1725, 1825, 1925, 2025, 2125, 2225) aufweist, das im Inneren des Fließkanals (323, 423, 523, 623, 723, 823, 923, 1023, 1123, 1223, 1323, 1423, 1523, 1623, 1723, 1823, 1923, 2023, 2123, 2223) angeordnet ist, das von dem Einsatz (18, 118, 718, 1118, 1218, 1318, 1418, 1518, 1618, 1718, 1818, 1918, 2018, 2118, 2218) gehalten wird und eine Schraubenform um die Längsachse (A) herum hat;
wobei das Verteilerelement in Kontakt mit der Innenoberfläche (22, 122, 222) des rohrförmigen Körpers (8, 108, 208) angeordnet ist.

6. Erhitzer (602, 1402, 1802, 2202) nach Anspruch 5 in Abhängigkeit von Anspruch 1, wobei die Innenoberfläche (22) des rohrförmigen Körpers (8) und die Außenoberfläche (121, 1421, 1821, 2221) des Einsatzes (118, 1418, 1818, 2218) zylindrisch und parallel zu der Längsachse (A) sind;
wobei das Verteilerelement (625, 1425, 1825, 2225) spiralförmig um den Einsatz (118, 1418, 1818, 2218) herum gewickelt ist und in Kontakt mit der Innenoberfläche (22) des rohrförmigen Körpers (8) und mit der Außenoberfläche (121, 1421, 1821, 2221) des Einsatzes (118, 1418, 1818, 2218) angeordnet ist; und
wobei der Fließkanal (623, 1423, 1823, 2223) ferner durch einen Teil der Außenoberfläche des Verteilerelements (625, 1425, 1825, 2225) begrenzt wird.

7. Erhitzer nach Anspruch 5 oder 6, wobei das Verteilerelement (325, 425, 525, 625, 725, 825, 925, 1025, 1125, 1225, 1325, 1425, 1525, 1625, 1725, 1825, 1925, 2025, 2125, 2225) entlang der Längsachse (A) elastisch verformbar ist und, wenn es unverformt ist, eine axiale Länge hat, die größer als die axiale Länge des Einsatzes (18, 118, 718, 1118, 1218, 1318, 1418, 1518, 1618, 1718, 1818, 1918, 2018, 2118, 2218) ist; und
wobei das Verteilerelement unter Montagebedingungen elastisch verformt wird.

8. Erhitzer (702, 802, 902, 1002) nach einem der vorhergehenden Ansprüche, wobei der Fließkanal (723, 823, 923, 1023) einen Durchgangsschnitt hat, der entlang der Längsachse (A) veränderlich ist.

9. Erhitzer (1102, 1202, 1302, 1402, 1502, 1602, 1702, 1802, 1902, 2002, 2102, 2202) nach einem der vorhergehenden Ansprüche, wobei der Einsatz (1118, 1218, 1318, 1418, 1518, 1618, 1718, 1818, 1918, 2018, 2118, 2218) im Inneren des rohrförmigen Körpers (8, 108, 208) zwischen wenigstens einer ersten Position, in welcher der Einsatz am nächsten an dem Einlass (10) angeordnet ist, und einer zweiten Position, in welcher der Einsatz am nächsten an dem Auslass (11) positioniert ist, beweglich ist.

10. Erhitzer (1102, 1202, 1302, 1402, 1502, 1602, 1702, 1802) nach Anspruch 9, wobei der Einsatz (1118, 1218, 1318, 1418, 1518, 1618, 1718, 1818) einen Schließabschnitt (1130, 1230, 1330, 1430, 1530, 1630, 1730, 1830) aufweist, der konfiguriert ist, um den Einlass fluiddicht abzudichten, wenn der Einsatz in der ersten Position angeordnet ist.

11. Erhitzer (1102, 1202, 1302, 1402, 1502, 1602, 1702, 1802) nach Anspruch 10, wobei der Einsatz (1118, 1218, 1318, 1418, 1518, 1618, 1718, 1818) mittels des Drucks des Wasserflusses, der an dem Einlass (10) auf den Einsatz selbst wirkt, im Inneren des rohrförmigen Körpers (8, 108, 208) beweglich ist.

12. Erhitzer (1502, 1602, 1702, 1802, 1902, 2002, 2102, 2202) nach Anspruch 9, wobei der Einsatz (1518, 1618, 1718, 1818, 1918, 2018, 2118, 2218) mittels eines magnetischen Aktuators (1531, 1631, 1731, 1831, 1931, 2031, 2131, 2231), der konfiguriert ist, um die Bewegung des Einsatzes zwischen der ersten Position und der zweiten Position zu steuern, im Inneren des rohrförmigen Körpers (8, 108, 208) beweglich ist.

13. Erhitzer nach einem der vorhergehenden Ansprüche, wobei die Wicklung (12) direkt auf den rohrförmigen Körper (8, 108, 208) gewickelt ist, oder wobei die Wicklung auf eine Spule (16) gewickelt ist, die gemeinsam auf dem rohrförmigen Körper (8, 108, 208) ausgeformt ist.

14. Maschine (1) für die Herstellung von Heißgetränken, die aufweist:
- einen Wasserdurchlauferhitzer mit elektromagnetischer Induktion (2, 102, 302, 403, 502, 602, 702, 802, 902, 1002, 1102, 1202, 1302, 1402, 1502, 1602, 1702, 1802, 1902, 2002, 2102, 2202) nach einem der vorhergehenden Ansprüche;
- einen hydraulischen Speisekreis (3), der über ein Fluid mit dem Erhitzer verbunden ist, um ihn mit einem Wasserfluss zu speisen; und
- eine elektrische Versorgungsschaltung (7), die mit der Wicklung (12) elektrisch verbunden ist, um sie elektrisch zu versorgen.

## Revendications

1. Chauffe-eau à écoulement continu à induction électromagnétique (2, 102, 302, 403, 502, 602, 702, 802, 902, 1002, 1102, 1202, 1302, 1402, 1502, 1602, 1702, 1802, 1902, 2002, 2102, 2202), en particulier pour une machine de préparation de boisson automatique (1) ;
le chauffe-eau comprend :
- un corps tubulaire (8, 108, 208) présentant un axe longitudinal (A) et comportant au moins une entrée (10), configuré pour recevoir de l'eau à chauffer et pour la distribuer, lors de l'utilisation, dans le corps tubulaire (8, 108, 208), et une sortie (11), à travers laquelle l'eau chauffée s'écoule hors du corps tubulaire (8, 108, 208) ; et
- un enroulement électrique (12) enroulé autour du corps tubulaire (8, 108, 208) et pouvant être excité électriquement pour générer un champ d'induction électromagnétique ;
le corps tubulaire (8, 108, 208) est constitué d'un matériau électriquement conducteur de sorte qu'il soit chauffé par induction électromagnétique sous l'effet dudit champ d'induction électromagnétique ;
le chauffe-eau comprend en outre un insert (18, 118, 718, 1118, 1218, 1318, 1418, 1518, 1618, 1718, 1818, 1918, 2018, 2118, 2218) logé à l'intérieur du corps tubulaire (8, 108, 208) et s'étendant le long de l'axe longitudinal (A) ; **caractérisé en ce que**
le chauffe-eau comprend en outre un canal d'écoulement hélicoïdal (23, 123, 223, 323, 423, 523, 623, 723, 823, 923, 1023, 1123, 1223, 1323, 1423, 1523, 1623, 1723, 1823, 1923, 2023, 2123, 2223) pour l'eau, qui s'étend hélicoïdalement autour de l'axe longitudinal (A) et est délimité par la surface interne (22, 122, 222) du corps tubulaire (8, 108, 208) et la surface externe (21, 121, 721, 1121, 1221, 1321, 1421, 1521, 1621, 1721, 1821, 1921, 2021, 2121, 2221) de l'insert.

2. Chauffe-eau (2, 202, 302, 502, 702, 802, 902, 1002, 1102, 1302, 1502, 1702, 1902, 2102) selon la revendication 1, dans lequel l'insert (18, 718, 1118, 1318, 1518, 1718, 1918, 2118) comprend un filetage (19, 719, 1119, 1319, 1519, 1719, 1919, 2119) définissant une première crête hélicoïdale (20, 720, 1120, 1320, 1520, 1720, 1920, 2120) s'étendant sur la surface externe (21, 721, 1121, 1321, 1521, 1721, 1921, 2121) de l'insert autour de l'axe longitudinal (A) et agencée en contact avec la surface interne (22, 222) du corps tubulaire (8, 208) de manière à délimiter le canal d'écoulement (23, 223, 323, 523, 723, 823, 923, 1023, 1123, 1323, 1523, 1723, 1923, 2123).

3. Chauffe-eau (202, 502, 802, 1002, 1302, 1702, 2102) selon la revendication 2, dans lequel le corps tubulaire (208) comprend une seconde crête hélicoïdale (220) qui s'étend sur la surface interne (222) du corps tubulaire (208) autour de l'axe longitudinal (A) ; et
la première crête hélicoïdale (20, 720, 1320, 1720, 2120) et la seconde crête hélicoïdale (220) délimitent au moins entre elles le canal d'écoulement (223, 523, 823, 1023, 1323, 1723, 2123).

4. Chauffe-eau (102, 402, 1202, 1602, 2002) selon la revendication 1, dans lequel le corps tubulaire (108) comprend une crête hélicoïdale (120) qui s'étend sur la surface interne (122) du corps tubulaire (108) autour de l'axe longitudinal (A) et qui est agencée en contact avec la surface externe (121, 1221, 1621, 2021) de l'insert (118, 1218, 1618, 2018), de manière à délimiter le canal d'écoulement (123, 423, 1223, 1623, 2023) ; et dans lequel la surface externe de l'insert est cylindrique et parallèle à l'axe longitudinal (A).

5. Chauffe-eau selon l'une quelconque des revendications précédentes, comprenant en outre un organe de déviation d'écoulement d'eau (325, 425, 525, 625, 725, 825, 925, 1025, 1125, 1225, 1325, 1425, 1525, 1625, 1725, 1825, 1925, 2025, 2125, 2225), agencé à l'intérieur du canal d'écoulement (323, 423, 523, 623, 723, 823, 923, 1023, 1123, 1223, 1323, 1423, 1523, 1623, 1723, 1823, 1923, 2023, 2123, 2223), porté par l'insert (18, 118, 718, 1118, 1218, 1318, 1418, 1518, 1618, 1718, 1818, 1918, 2018, 2118, 2218) et présentant une forme hélicoïdale autour de l'axe longitudinal (A) ;
l'organe de déviation est agencé en contact avec la surface interne (22, 122, 222) du corps tubulaire (8, 108, 208).

6. Chauffe-eau (602, 1402, 1802, 2202) selon la revendication 5 dépendant de la revendication 1, dans lequel la surface interne (22) du corps tubulaire (8) et la surface externe (121, 1421, 1821, 2221) de l'insert (118, 1418, 1818, 2218) sont cylindriques et parallèles à l'axe longitudinal (A) ;
dans lequel l'organe de déviation (625, 1425, 1825, 2225) est enroulé hélicoïdalement autour de l'insert (118, 1418, 1818, 2218) et est agencé en contact avec la surface interne (22) du corps tubulaire (8) et avec la surface externe (121, 1421, 1821, 2221) de l'insert (118, 1418, 1818, 2218) ; et
dans lequel le canal d'écoulement (623, 1423, 1823, 2223) est en outre délimité par une partie de la surface externe de l'organe de déviation (625, 1425, 1825, 2225).

7. Chauffe-eau selon la revendication 5 ou 6, dans lequel l'organe de déviation (325, 425, 525, 625, 725, 825, 925, 1025, 1125, 1225, 1325, 1425, 1525, 1625, 1725, 1825, 1925, 2025, 2125, 2225) est déformable élastiquement le long de l'axe longitudinal (A) et présente, lorsqu'il n'est pas déformé, une longueur axiale supérieure à la longueur axiale de l'insert (18, 118, 718, 1118, 1218, 1318, 1418, 1518, 1618, 1718, 1818, 1918, 2018, 2118, 2218) ; et
dans lequel l'organe de déviation est déformé élastiquement dans des conditions d'assemblage.

8. Chauffe-eau (702, 802, 902, 1002) selon l'une quelconque des revendications précédentes, dans lequel le canal d'écoulement (723, 823, 923, 1023) présente une section de passage variable le long de l'axe longitudinal (A).

9. Chauffe-eau (1102, 1202, 1302, 1402, 1502, 1602, 1702, 1802, 1902, 2002, 2102, 2202) selon l'une quelconque des revendications précédentes, dans lequel l'insert (1118, 1218, 1318, 1418, 1518, 1618, 1718, 1818, 1918, 2018, 2118, 2218) est mobile à l'intérieur du corps tubulaire (8, 108, 208) entre au moins une première position, à laquelle l'insert est agencé au plus près de l'entrée (10), et une seconde position, à laquelle l'insert est agencé au plus près de la sortie (11).

10. Chauffe-eau (1102, 1202, 1302, 1402, 1502, 1602, 1702, 1802) selon la revendication 9, dans lequel l'insert (1118, 1218, 1318, 1418, 1518, 1618, 1718, 1818) comprend une portion de fermeture (1130, 1230, 1330, 1430, 1530, 1630, 1730, 1830) configurée pour sceller de manière imperméable l'entrée lorsque l'insert est agencé à la première position.

11. Chauffe-eau (1102, 1202, 1302, 1402, 1502, 1602, 1702, 1802) selon la revendication 10, dans lequel l'insert (1118, 1218, 1318, 1418, 1518, 1618, 1718, 1818) est mobile à l'intérieur du corps tubulaire (8, 108, 208) au moyen de la pression de l'écoulement d'eau agissant sur l'insert proprement dit à l'entrée (10).

12. Chauffe-eau (1502, 1602, 1702, 1802, 1902, 2002, 2102, 2202) selon la revendication 9, dans lequel l'insert (1518, 1618, 1718, 1818, 1918, 2018, 2118, 2218) est mobile à l'intérieur du corps tubulaire (8, 108, 208) au moyen d'un actionneur magnétique (1531, 1631, 1731, 1831, 1931, 2031, 2131, 2231) configuré pour commander le déplacement de l'insert entre la première position et la seconde position.

13. Chauffe-eau selon l'une quelconque des revendications précédentes, dans lequel l'enroulement (12) est enroulé directement sur le corps tubulaire (8, 108, 208) ou dans lequel l'enroulement est enroulé sur une bobine (16) co-moulée sur le corps tubulaire (8, 108, 208).

14. Machine (1) pour la préparation de boissons chaudes comprenant :
- un chauffe-eau à écoulement continu à induction électromagnétique (2, 102, 302, 403, 502, 602, 702, 802, 902, 1002, 1102, 1202, 1302, 1402, 1502, 1602, 1702, 1802, 1902, 2002, 2102, 2202) selon l'une quelconque des revendications précédentes ;
- un circuit d'approvisionnement hydraulique (3) relié fluidiquement au chauffe-eau pour l'approvisionner avec un écoulement d'eau ; et
- un circuit d'alimentation électrique (7) relié électriquement à l'enroulement (12) pour l'exciter électriquement.
